# EUROPEAN PATENT APPLICATION

(11) **EP 1 840 553 A1**
(43) Date of publication of application: **03.10.2007**
(21) Application number: 07380082.3
(22) Date of filing: 28.03.2007
(51) Int. Cl.: G01N 1/10, G01N 35/10, B01L 3/00, B01L 3/14, B65D 47/24

(54) **A stopper with a connector for a sampling cannula.**

(30) Priority: 29.03.2006 ES 200600720
(71) Applicant: Cabal Marques, Albert, 08208 Sabadell (ES)
(72) Inventor: Cabal Marques, Albert, 08208 Sabadell (ES)
(74) Representative: Torras Toll, Jorge

(57) **Abstract**

A device for the taking of liquid samples, of the type used for the transfer of a liquid sample from a tank to an analysis flask/container or analogous device, essentially characterised in that it is comprised of two basic elements, a transfer cannula (7) capable of being attached by its proximal end to the tank from which it is desired to take the sample, and a stopper (4) capable of being attached to the flask/container (3) or analogous element, featuring at its centre a cylinder (5) with a plug (6), into which the distal end of the cannula (7) is inserted.

## Description

The object of this invention, as is expressed in the heading of this specification, consists of an improved device for the taking of liquid samples, for use both in healthcare environments and in the food, chemical, pharmaceutical or similar industries.

In certain situations, the taking of liquid samples for the carrying out of analyses is essential in some industrial or laboratory environments or applications.

Traditionally, the taking of liquid samples, for industrial or laboratory purposes, is carried out by pouring said sample from an indeterminate general container (in which the entirety or a part of the liquid to be analysed is held) through a cannula into a standard sample test-tube, normally consisting of a type of receptacle of small dimensions capable of holding a small quantity of said liquid, but sufficient for its analysis and/or storage.

For certain applications, such as the taking of samples for clinical analysis, said sampling must be totally aseptic; in this way, the sample cannot be accidentally contaminated by external pathogenic, chemical or atmospheric elements, which would alter the final results of the supposed analysis.

Likewise, it is sometimes of paramount importance that the taking of samples should be carried out in such a way as to guarantee that the liquid cannot be accidentally spilled during the phase of the taking of the sample, as could be the case of toxic, contaminating or merely unpleasant liquids.

The traditional method of taking samples as described above presents a serious drawback, and is not usually safe with regard to the two aspects mentioned above, that is to say, it is usually neither aseptic nor is it safe, regarding the avoidance of spillage of the liquid.

In order to overcome this drawback, the innovative improved device for the taking of liquid samples, which is the object of this specification, has been designed.

This new device is designed in such a way that the transfer of the sample, from a general container of liquid to a sample test-tube, may be carried out in a practically airtight way, that is to say, the transfer of the liquid is hardly carried out in the open air nor are there possibilities that said sample may be accidentally contaminated or spilled.

The innovative device consists of a stopper, equipped with a small cylinder (with a plug) at its centre, into which a cannula is inserted; said cannula has two positions: the "open" position, where the plug of the central cylinder is separated from the distal end of the cannula, allowing the liquid to flow, and the "closed" position, where the plug is embedded in the distal end of the cannula, preventing the flow of liquid; normally said cannula will be in the "closed" position. The central cylinder of the stopper is equipped with an internal annular ribbing, whose purpose is to lock as required onto two annular depressions in the cannula, and whose purpose is to fix the "open" or "closed" position of the cannula, always preventing its total removal.

A standard sample flask or container is attached to the stopper.

The proximal end of the cannula features a zone prepared for attachment by means of thrusting, welding, screwing or any other means to any type of tank or conduit containing, or through which circulates, the liquid from which the sample is desired to be taken.

Use of the innovative device is most simple and safe: the cannula being in the normally "closed" position, the operator should separate said cannula from the stopper of the test-tube; in doing so, the cannula will move away from the plug, thus adopting the "open" position; subsequently, the liquid will flow (whether by gravity or by force) from the general liquid container which is connected to the proximal end of the cannula into the flask / container which is connected to the distal end of the cannula; when the operator considers that the flask / container has been filled with a sufficient quantity of the liquid sample, then (s)he should press the end of the cannula against the stopper of the flask / container; in doing so, the plug will once again be embedded in the distal end of said cannula, that is to say, in the "closed" position. On completion of this operation, the user will separate the parts of the device and will seal the latter with a permanent, independent stopper.

### DESCRIPTION OF THE DRAWINGS

In order to illustrate what has been revealed above, a set of drawings is attached to this specification and is an integral part of the same; in said drawings an example of an embodiment of the characteristics of the innovative improved device for the taking of liquid samples is portrayed in a simplified and schematic manner; said embodiment is merely explicative although not limitative.

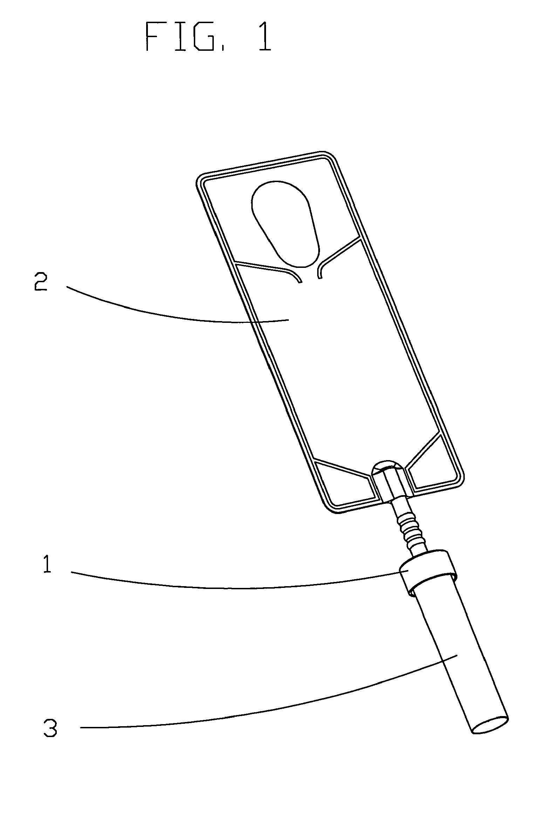

- Figure 1: portrays a general view of the innovative device, in this case attached to a paediatric urine collection bag.
- Figure 2: portrays a sectional perspective view of the innovative device, with its cannula in the "open" position.
- Figure 3: portrays a sectional perspective view of the innovative device, with its cannula in the "closed" position.

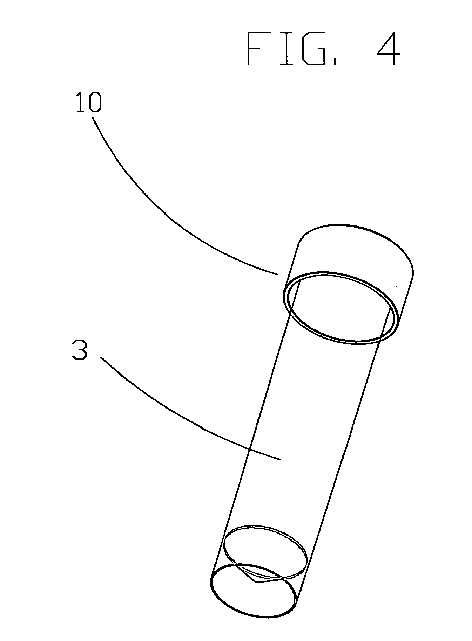

- Figure 4: portrays a perspective view of the covered sample flask/container.

### DESCRIPTION OF A PRACTICAL EMBODIMENT

In the figures attached to this specification, a practical embodiment of the device which is the object of the same is disclosed as an example.
In this practical embodiment, proposed for healthcare uses, the new device (1) is portrayed attached to a paediatric urine sample collection bag (2) and already incorporates the sample collection flask/container (3).

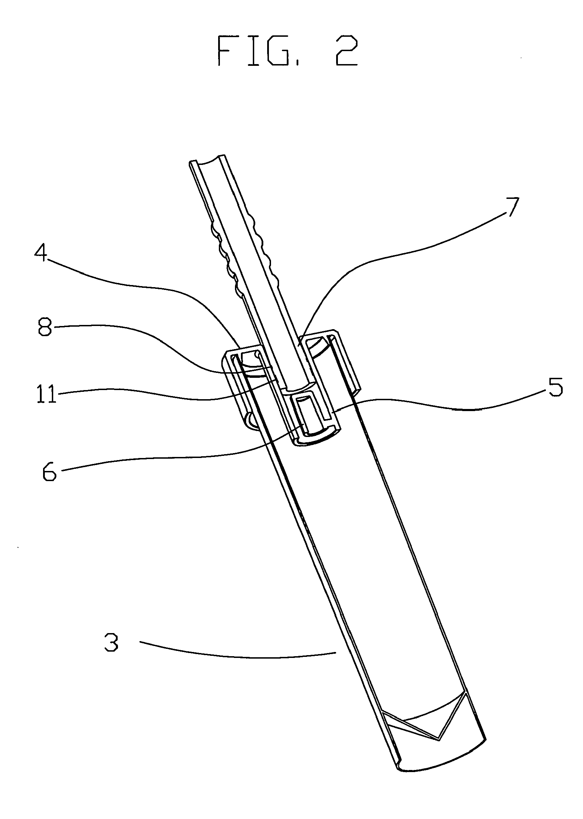

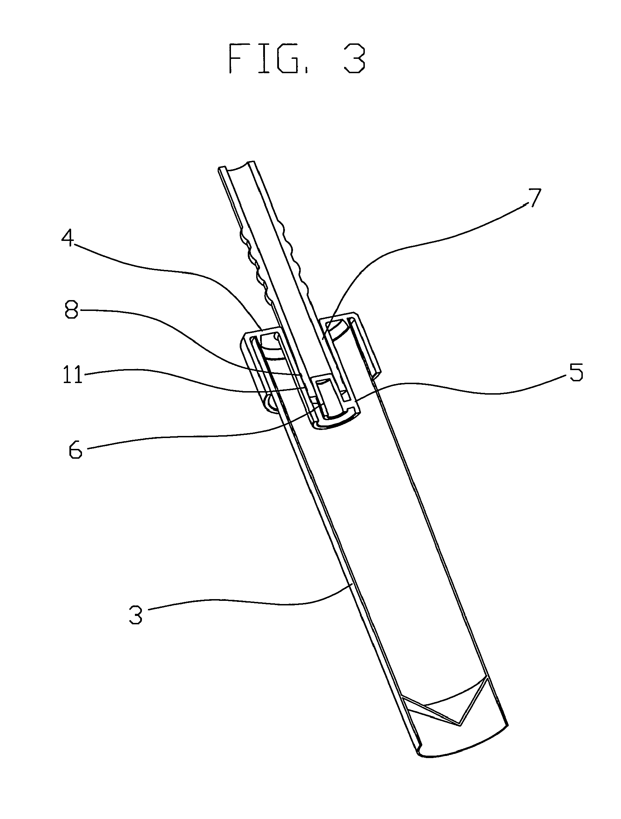

The new device (1) is comprised of a stopper (4), equipped with a small cylinder (5) with a plug (6) at its centre into which a cannula (7) is inserted; said cannula (7) has two positions: the "open" position, where the plug (6) of the cylinder (5) is separated from the distal end of the cannula (7), allowing the liquid to flow (Fig. 2), and the "closed" position, where the plug (6) of the cylinder (5) is embedded in the distal end of the cannula (7), preventing the flow of liquid (Fig.3).

The central cylinder (5) of the stopper (4) features an internal annular ribbing whose purpose is to lock onto two annular depressions (8 and 11) existing in the cannula, and whose purpose is to fix the "open" and "closed" positions of the cannula.

Attached to the stopper (4) by means of screwing is the standard sample flask/container (3); this consists of a small-sized cylindrical receptacle with a decantation cone (9) at its base.

The assembly is completed by means of a conventional stopper (10) whereby the testing flask (3) is permanently closed after filling.

Use of the innovative device (1) is most simple and safe: the cannula (7) being in the normally "closed" position, the operator should separate said cannula (7) from the stopper (4) of the flask/container (3); in doing so, the cannula (7) will move away from the plug (6), thus adopting the "open" position; subsequently, the liquid will flow in this example by gravity from the urine bag (2) which is connected to the proximal end of the cannula (7) into the flask/container (3) which is connected to the distal end of said cannula (7); when the operator considers that the flask /container (3) has been filled with a sufficient quantity of urine, then (s)he should press the end of the cannula (7) against the stopper (4) of the flask/container (3); in doing so, the plug (6) will once again be embedded in the distal end of said cannula (7), that is to say, in the "closed" position. On completion of this operation, the user will separate the device (1) and the flask/container (3) by unscrewing the same and will seal the latter (3) with a permanent, independent stopper (10).

The materials used in the manufacture of the various elements which make up the device shall be independent of the object of this invention, as shall be the shapes, dimensions and accessories which it may feature, it being possible to replace them with others which shall be technically equivalent, on condition that they shall not affect the essentiality of the same nor stray from the scope defined in the section of claims.

Having established the aforementioned concept, the list of claims is drawn up below, thus summarising the innovations which it is desired to claim:

## Claims

1. Improved device for the taking of liquid samples", of the type used for the transfer of a liquid sample from a tank to an analysis flask/container or analogous device, essentially **characterised in that** it is comprised of two basic elements, a transfer cannula capable of being attached by its proximal end to the tank from which it is desired to take the sample, and a stopper capable of being attached to the flask/container or analogous element, featuring at its centre a cylinder with a plug, into which the distal end of the cannula is inserted.

2. A device according to the preceding claim, **characterised in that**, with regard to the stopper, the cannula features two stable positions, one of these "open", where the plug of the central cylinder is separated from the distal end of the cannula, allowing the liquid to flow, and the other being "closed", where the plug is embedded in the distal end of the cannula, preventing the flow of liquid through the same.

3. A device according to preceding claims, **characterised in that** the central cylinder of the stopper is equipped with an internal annular ribbing which will lock as required onto two annular depressions in the cannula, which fix the "open" and "closed" positions of the cannula.
